# EUROPEAN PATENT APPLICATION

(11) **EP 3 308 947 A1**
(43) Date of publication of application: **18.04.2018**
(21) Application number: 16306365.4
(22) Date of filing: 17.10.2016
(51) Int. Cl.: B29C 70/30, B29D 99/00, B29C 70/20, B29K 105/10, B29L 31/08

(54) **BLADE COMPONENT**

(71) Applicant: Ratier-Figeac SAS, 46100 Figeac Cedex (FR)
(72) Inventor: BRION, Patrice, 46100 LUNAN (FR)
(74) Representative: Leckey, David Herbert

(57) **Abstract**

A blade component (30) has a longitudinal axis (100) and extends between a root end (32) and a tip end (34). The component comprises a composite laminate structure (20), the laminate structure (20) comprising a plurality of plies (22, 24) of fibres (26, 28) in a matrix, wherein all the plies (22, 24) are arranged such that the fibres (26, 28) in respective plies (22, 24) are oriented symmetrically relative to the component axis (100) at respective layup angles, the layup angles being in the range of 19° to 25° and - 19° to -25° respectively relative to the component axis (100).

## Description

### TECHNICAL FIELD

The present disclosure relates to blade components such as propeller blade structural spars.

### BACKGROUND

Blade components such as propeller blade structural spars may include a laminate structure to provide improved mechanical characteristics of the component. The laminate structure may be formed from several layers or plies, each ply comprising fibres aligned in the same direction across their respective surfaces.

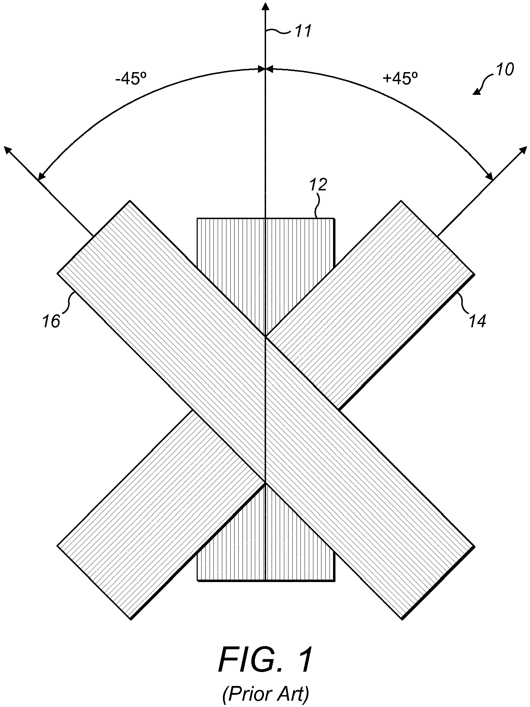

In order to accommodate the various loads in the structure, the orientation of the fibres typically differs in the plies. In a known lay-up, as shown in Figure 1 a first ply 12 has fibres aligned with the axis 11 of the component, i.e. a 0° orientation and second and third plies 14, 16 oriented at +/-45° from the axis 11 of the component.

In such an arrangement, centrifugal loads and aero bending moment resistance and stiffness are sustained by the 0° fibres of the first ply 12, while the torsional loading and torsional stiffness are sustained by the +/-45° fibres of the second and third plies 14, 16.

However, in order to provide optimum performance the +/-45° plies 14, 16 and 0° plies 12 should be mixed and equally distributed along the lay-up thickness to avoid interlaminar shear overstresses. The lay-up should also be arranged symmetrically about the axis to avoid thermal overstresses and material distortion of the component. However, during manufacture, equal distribution and exact symmetry can be difficult to attain. Furthermore, when braiding the layers, the 0° and +/-45° layers require two different braiding machines. Each machine requires different configurations to manufacture these two different angles.

### SUMMARY

In accordance with the disclosure, there is provided a blade component having a longitudinal axis and extending between a root end and a tip end, the component comprising a composite laminate structure. The laminate structure comprises a plurality of plies of fibres in a matrix, wherein all the plies are arranged such that the fibres in respective plies are oriented symmetrically relative to the component axis at respective layup angles. The layup angles are in the range of 19° to 25° and -19° to -25° respectively relative to the component axis.

The plurality of plies may comprise one or more first plies each comprising fibres aligned at a layup angle α relative to the component axis and one or more second plies each comprising fibres aligned at a layup angle of -α relative to the component axis.

The plurality of plies may further comprise one or more third plies comprising fibres aligned at a layup angle of β relative to the component axis and one or more fourth plies comprising fibres aligned at a layup angle of -β relative to the component axis and wherein ß is different from α and wherein α and ß are both in the range of 19° to 25° and - 19° to -25°.

Alternating plies may be arranged symmetrically relative to the component axis.

The layup angle may be in the range ± 20° to 23°.

There is also provided a method of manufacturing a blade component having a longitudinal axis and extending between a root end and a tip end. The method comprises laying a plurality of plies of fibres on a core, all the plies being arranged such that the fibres in the plies are oriented symmetrically relative to the component axis at respective layup angles, the layup angles being in the range of 19° to 25° and - 19° to -25° respectively relative to the component axis. The method further comprises curing the component with the plies to form a laminated structure on the core.

The plurality of plies may comprise one or more first plies each comprising fibres aligned at a layup angle α relative to the component axis and one or more second plies each comprising fibres aligned at a layup angle of -α relative to the component axis.

The plurality of plies may further comprise one or more third plies comprising fibres aligned at a layup angle of ß relative to the component axis and one or more fourth plies comprising fibres aligned at a layup angle of -ß relative to the component axis.

Alternating plies may be oriented symmetrically relative to the component axis.

The layup angle may be in the range ± 20° to 23°

The plies may be formed from sheets or tapes of fibre material.

The plies may be pre-impregnated with a resin or wherein a resin is applied to the plies for curing.

The blade component may be a propeller blade component or a fan blade component. For example, the blade component may be a blade spar. The laminate structure may be provided on a core of the spar.

### BRIEF DESCRIPTION OF DRAWINGS

Some embodiments of the disclosure will now be described by way of example only and with reference to the accompanying drawings in which:
Figure 1 shows a lay-up of fibre plies for a propeller blade component according to the prior art;
Figure 2 shows a lay-up of fibre plies for a propeller blade component according to this disclosure;
Figure 3 shows a propeller blade component and plies oriented at different angles relative to the component axis; and
Figure 4 shows a propeller blade component and composite tapes oriented at different angles relative to the component axis.

### DETAILED DESCRIPTION

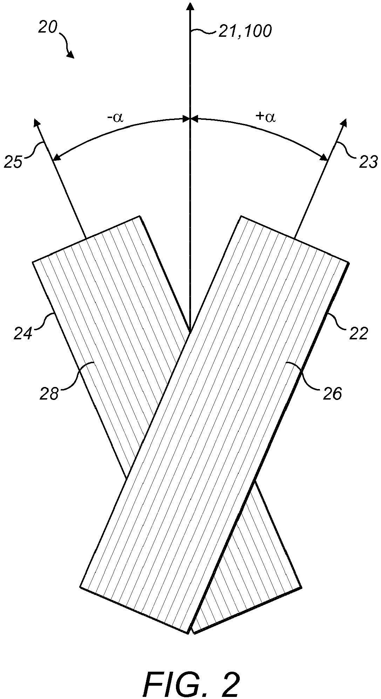

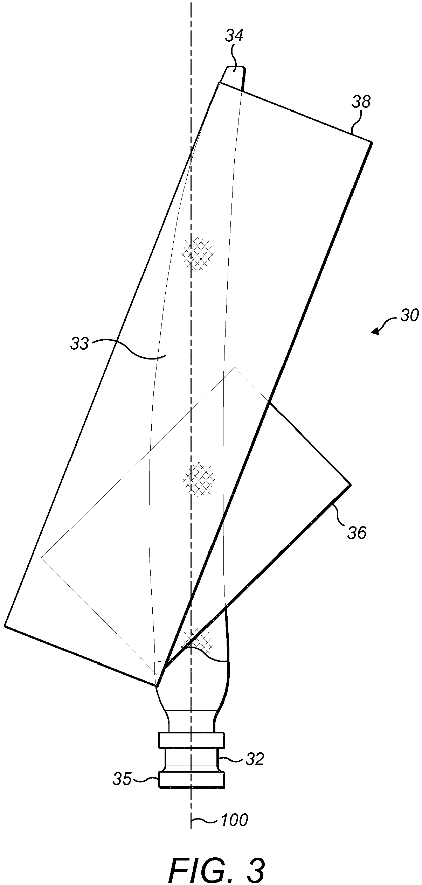

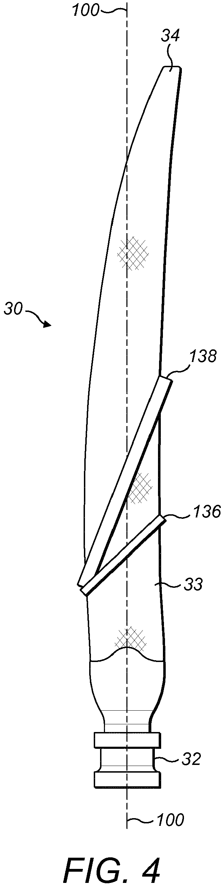

With reference to Figures 2 to 4, Figure 2 shows an exemplary laminate structure 20 for a propeller blade component such as a structural spar 30 as illustrated in Figures 3 and 4.

With reference to Figure 3, the structural spar 30 includes a root 32 and a tip 34 and a body 33 extending from the root 32 to the tip 34. The body 33 extends along an axis 100 defining 0° orientation with respect to the ply lay-up. The axis may be in the perpendicular plane of the propeller blade rotation axis or, in the case of curved blades, may have a local blade axis at any given point defined perpendicular to the local blade section. The root 32 comprises or is attached to a retention element 35 which retains the blade in a hub in use. The blade is usually rotatable about the axis 100, for example to allow the blade to be feathered.

Returning to Figure 2, the laminate structure 20 includes a first ply 22 and a second ply 24. The first ply 22 comprises a plurality of fibres shown schematically at 26. The fibres 26 may, for example, comprise carbon fibres, glass fibres, aramid fibres or the like. The fibres 26 of the first ply 22 are aligned along a single direction shown by the arrow 23. That is, a majority of or substantially all the fibres 26 are aligned in the same direction throughout the first ply 22. For example, at least 90% of the fibres are aligned in the same direction and up to 10% of the fibres might be arranged at about 90° to the remaining fibres. The first ply 22 is oriented relative to a central axis 21 such that a layup angle +α is defined between the central axis 21 and the direction 23 of the fibres 26. The axis 21 is aligned with a longitudinal axis of the component, for example the axis 100 of the spar 30 as illustrated in Figures 3 and 4.

The second ply 24 comprised a plurality of fibres shown schematically at 28. The fibres 28 may also, for example, comprise carbon fibres, glass fibres, aramid fibres. In the embodiment, the fibres 28 of the second ply 24 are substantially the same as the fibres 26 of the first ply 22. The fibres 28 of the second ply 24 are aligned along a single direction shown by the arrow 25. That is a majority of or substantially all the fibres 28 are aligned in the same direction throughout the second ply 24. The second ply 24 is oriented relative to the central axis 21 such that a layup angle -α (i.e. the opposite of angle α) is defined between the central axis 21 and the direction 25 of the fibres 28.

Thus the first ply 22 and the second ply 24 are arranged symmetrically relative to the central axis 21 of the structure.

The plies may be applied to a core to form the laminated structure. In the case of a spar as illustrated in Figure 3, the plies 22, 24 may be applied to a lightweight core, for example a foam core. The first and second plies 22, 24 may then be braided on to or otherwise attached to the core. In embodiments, the plies 22, 24 might include dry fibres, such as carbon fibres, braided onto the outer surface of the core. Resin may be subsequently injected into the plies 22, 24. Alternatively, the plies 22, 24 may be formed from a pre-impregnated fabric material, such as a resin impregnated carbon fibre fabric.

As shown in Figures 3 and 4, the plies 22, 24 might be attached to the core in the form of sheets 38 or tapes 138. The plies 22, 24 may be attached to the core such that they surround the entire circumference of the core.

In embodiments, the laminate structure 20 has a uniform thickness for a given cross section along the spar 30. The first and second plies 22, 24 may also have the same thickness. It will be appreciated, however, that the thickness of the laminate structure 20 might be varied achieved by applying plies of uniform thickness only in specific areas on the core, for example.

After resin injection or application of pre-impregnated material, the spar 30 is heated or cured to set the laminate structure 20.

Although the laminate structure 20 illustrated includes two plies 22, 24, it is envisaged that any number of plies may be used. For example, in a propeller blade spar the laminate structure 20 may include between 15 and 30 plies. In another example, a laminate structure for use in a fan blade may include up to and in excess of 80 plies.

The plies are arranged such that the fibres of all the plies are oriented at an angle of between 19° and 25° from the axis of the spar 30 in either direction. In embodiments, the fibres may be oriented at an angle of 20°, 22° or 23° from the central axis 21. None of the plies is arranged such that the fibres are aligned with the axis 21 (i.e. at 0°).

In particular embodiments, there may only be first and second plies 22, 24 having fibres 26, 28 arranged at the same angle relative to the central axis at respective layup angles of ±α, to the central axis 21. In embodiments, there may be multiple first and second plies with such orientations.

In some multiple ply arrangements, the orientation of the plies relative to the central axis 21 may alternate (for example, α -α α -α). In other multiple ply arrangements, the order may not alternate between adjacent plies (for example α α -α -α)

Embodiments having plies 22, 24 that are oriented at just one angle around the axis 21 may be easier to form. In particular it may be easier to maintain the symmetry of the lay-up throughout the plies 22, 24, particularly when compared to structures containing 0° fibres.

In yet further embodiments however, the laminate structure 20 might include one or more first plies 22 oriented at an angle α, one or more second plies 24 oriented at -α, one or more third plies (not shown) oriented at an angle β and one or more fourth plies (not shown) oriented at -β, β being different from α.

Having the fibres 26, 28 of all the plies 22, 24 oriented at an angle of between 19° and 25° from the axis 21 may improve the inter-laminar shear strength of the laminate structure 20 as the maximum angle between two fibres of the structure is less than 90°.

Moreover, the curing thermal stressing between plies may be reduced or even eliminated in the case of interlacing fibres.

A further advantage of embodiments having the plies oriented at angles between 19 and 25° is that cutting of plies 22, 24 during application to a core, will result in lower scrap material when compares to plies that are oriented at 45°, for example. This is best shown in Figure 3 in which a first ply 38 is shown oriented at 19-25° from the blade axis and a second ply 36, outside the scope of the disclosure, is oriented at 45° from the blade axis. As can be seen from the lay-up of both plies, the first ply 38 requires less cutting of the ply material and thus less waste may be produced.

An embodiments where the plies are formed from tapes, is illustrated in Figure 4. As shown, a first tape 136 is arranged at 45° relative to the axis 100 and a second tape 138 is arranged at between 19 and 25° relative to the axis 100. The tapes may be automatically laid on a core surface using a tape-laying apparatus. By having the angle between the tape 138 and the central axis 100 reduced, for example when the fibres of the tape are aligned along the length of the tape, fibre deposit speed can be increased and the steering of the apparatus across the surface of the core may be simplified and reduced. Moreover, it will be seen that the second tape 136 extends along a greater length of the core structure and therefore fewer tapes and less steering of the deposition apparatus may be required than in laying down tapes 136 at a greater angle, outside the scope of this disclosure.

In embodiments where the plies are braided, only one braiding machine may be needed to lay the plies, particularly in embodiments where the fibres are aligned symmetrically about the spar axis 100.

From the above, it will be recognised that there is proposed a laminate structure wherein plies have fibres oriented at opposite angles relative to a central axis, the angle being in the range of 19° to 25°. In particular embodiments, the fibres within the plies are oriented at a single angle either side of the axis of the component to form a symmetrical laminate structure. The mechanical characteristics of such laminate structures have to been found to be comparable to the known 0°±45° lay-up and further have considerable performance and manufacturing advantages as described above. Table 1 shows a number of mechanical characteristics of components having laminate structures in accordance with the disclosure compared to the characteristics of components having the conventional 0°±45° lay-up. The characteristics of the components according to this disclosure were found to be comparable within acceptable limits for a variety of applications.

**Table 1**

| **Lamination Type** | **[0°,+/-45°] (50%/50%)** | **[+/-23°]** | **[0°,+/-45°] (50%/50%)** | **[+/-22°]** | **[0°,+/-45°] (60%/40%)** | **[+/-20°]** | **[0°,+/-45°] (50%/50%)** | **[+/-20°]** |
|---|---|---|---|---|---|---|---|---|
| Type of Fibre | Carbon HR | Carbon HR | Carbon IM | Carbon IM | Carbon HR | Carbon HR | Carbon IM | Carbon IM |
| Volume of Fibre | 60% | 60% | 60% | 60% | 60% | 60% | 60% | 60% |
| | | | | | | | | |
| **1. Rigidity** | | | | | | | | |
| E1 (blade axis) | 83 | 80 | 96 | 94 | 97 | 95 | 112 | 107 |
| E2 (chord direction) | 24 | 10 | 26 | 9.4 | 22 | 10 | 23 | 10 |
| G12 (torsional stiffness) | 21 | 22 | 24 | 24 | 18 | 19 | 21 | 21 |
| Poisson's Ratio | 0.7 | 1.5 | 0.75 | 1.7 | 0.68 | 1.4 | 0.72 | 1.6 |
| | | | | | | | | |
| **2. Strength (Static Force)** | | | | | | | | |
| Ultimate blade axis (MPa) | 680 | 490 | 1473 | 950 | 820 | 630 | 1770 | 1140 |
| First Ply Failure blade axis (Mpa) | 470 | 490 | 770 | 950 | 550 | 630 | 895 | 1140 |
| | | | | | | | | |
| Ultimate chord direction (Mpa) | 290 | 47 | 379 | 47 | 240 | 46 | 340 | 46 |
| First Ply Failure chord direction (Mpa) | 110 | 47 | 131 | 47 | 100 | 46 | 114 | 46 |
| | | | | | | | | |
| **3. Coefficient of Expansion** | | | | | | | | |
| Blade Axis | -1.7 | -3.5 | -0.23 | -2.15 | -0.7 | -2.9 | -0.25 | -1.84 |
| Chord Axis | 23.5 | 22.7 | 5.23 | 16.4 | 9.8 | 24.2 | 6.3 | 17.1 |

While the disclosure has been particularly directed to a structural spar of a propeller blade, it may be used for other blade components, for example an external skin for a propeller blade. The principles of the invention may also be applied to fan blades, particularly those manufactures by Automatic Fibre Placement (AFP) process.

## Claims

1. A blade component (30) having a longitudinal axis (100) and extending between a root end (32) and a tip end (34), the component comprising a composite laminate structure (20), the laminate structure (20) comprising a plurality of plies (22, 24) of fibres (26, 28) in a matrix, wherein all the plies (22, 24) are arranged such that the fibres (26, 28) in respective plies (22, 24) are oriented symmetrically relative to the component axis (100)at respective layup angles, the layup angles being in the range of 19° to 25° and - 19° to -25° respectively relative to the component axis (100).

2. A blade component as claimed in claim 1, wherein the plurality of plies (22, 24) comprises one or more first plies (24) each comprising fibres (26) aligned at a layup angle α relative to the component axis (100) and one or more second plies (24) each comprising fibres (28) aligned at a layup angle of -α relative to the component axis (100).

3. A blade component as claimed in claim 2 wherein the plurality of plies further comprises one or more third plies comprising fibres aligned at a layup angle of β relative to the component axis (100) and one or more fourth plies comprising fibres aligned at a layup angle of -ß relative to the component axis (100) and wherein ß is different from α, wherein α and ß are both in the range of 19° to 25° and - 19° to -25°

4. A blade component as claimed in any preceding claim wherein alternating plies (22, 24) are arranged symmetrically relative to the component axis (100).

5. A blade component as claimed in any preceding claim wherein the layup angle is in the range ± 20° to 23°.

6. A method of manufacturing a blade component (30) having a longitudinal axis (100) and extending between a root end (32) and a tip end (34), the method comprising:
laying a plurality of plies (22, 24) of fibres (26, 28) on a core, all the plies (22, 24) being arranged such that the fibres (26, 28) in the plies (22, 24) are oriented symmetrically relative to the component axis (100) at respective layup angles, the layup angles being in the range of 19° to 25° and - 19° to -25° respectively relative to the component axis (100); and
curing the component (30) with the plies (22, 24) to form a laminated structure (20) on the core.

7. A method of manufacturing a blade component as claimed in claim 6, wherein the plurality of plies (22, 24) comprises one or more first plies (22) each comprising fibres (26) aligned at a layup angle α relative to the component axis (100) and one or more second plies (24) each comprising fibres (28) aligned at a layup angle of -α relative to the component axis (100).

8. A method of manufacturing a blade component as claimed in claim 7, wherein the plurality of plies further comprises one or more third plies comprising fibres aligned at a layup angle of ß relative to the component axis (100) and one or more fourth plies comprising fibres aligned at a layup angle of -ß relative to the component axis (100).

9. A method of manufacturing a blade component as claimed in claim 6, 7 or 8 wherein alternating plies (22, 24) are oriented symmetrically relative to the component axis (100).

10. A method of manufacturing a blade component as claimed in any of claims 6 to 9, wherein the layup angle is in the range ± 20° to 23°

11. A blade component or method as claimed in any preceding claim wherein the plies (22, 24) are formed from sheets or tapes of fibre material.

12. A blade component or method as claimed in claim 11 wherein the plies (22, 24) are pre-impregnated with a resin or wherein a resin is applied to the plies (22, 24) for curing.

13. A blade component or method of manufacturing a blade component as claimed in any preceding claim, wherein the blade component is a propeller blade component or a fan blade component.

14. A blade component or method of manufacturing a blade component as claimed in any preceding claim wherein the blade component is a blade spar (30).

15. A blade component as claimed in claim 14, wherein the laminate structure (20) is provided on a core of the spar (30).
